# EUROPÄISCHE PATENTANMELDUNG

(11) **EP 1 860 768 A2**
(43) Veröffentlichungstag der Anmeldung: **28.11.2007**
(21) Anmeldenummer: 07006111.4
(22) Anmeldetag: 24.03.2007
(51) Int. Cl.: H02P 25/16

(54) **Stromversorgungsgerät für einen Drehstrom-Asynchronmotor eines Antriebs mit quadratischer Drehmomentkurve**

(30) Priorität: 23.05.2006 DE 202006008364 U
(71) Anmelder: Jakob, Karl, Dipl.-Ing. Dr. h.c., 85598 Baldham (DE)
(72) Erfinder: Jakob, Karl, Dipl.-Ing. Dr. h.c., 85598 Baldham (DE)
(74) Vertreter: Körner, Ekkehard

(57) **Zusammenfassung**

Eine Stromversorgungsgerät für einen Drehstrom-Asynchronmotor eines Antriebs mit quadratischer Drehmomentkurve enthält einen Drehstrom-Spartransformator mit drei für die volle Spannung Phase gegen Null ausgelegten Grundwicklungen und drei auf den selben Kern gewickelten Zusatzwicklungen von denen je eine mit je einer der Grundwicklungen in Reihe geschaltet ist, und eine Schalteranordnung, die Anschlüsse zur Verbindung mit dem Stromnetz, Anschlüsse zur Verbindung mit einem Drehstrom-Asynchronmotor und Anschlüsse und Verbindungsleitungen zum Verbinden des Drehstrom-Asynchronmotors wahlweise mit den Stromnetz oder mit den Grundwicklungen des Drehstrom-Spartransformators, und des Stromnetzes wahlweise mit den Grundwicklungen oder dem freien Ende der Zusatzwicklungen. Die Windungszahlen der Zusatzwicklungen haben vorzugsweise etwa 75% der Windungszahlen der Grundwicklungen, so dass sich durch Zuschaltung der Zusatzwicklungen derselbe Effekt ergibt, als würde man bei einem Drehstrom-Trenntransformator die Primärseite von Dreieckschaltung auf Sternschaltung umschalten.

## Beschreibung

Für die Stromversorgung von Drehstrommotoren, z.B. für Lüfter- oder Pumpenantriebe, die mit variablen Drehzahlen betrieben werden sollen, werden in der Regel Phasenanschnittsteuerungen oder Frequenzumformer eingesetzt. Bei beiden Einrichtungen sind erhebliche Geräuschentwicklungen im Drehstrommotor zu beobachten, die davon herrühren, dass die dem Motor zugeführten Spannungen nicht sinusförmig sind, sondern ein breites Oberwellenspektrum aufweisen.

Außerdem hat diese Art der Stromversorgung erhebliche Zusatzverluste zur Folge. Beispielsweise ist bei Phasenanschnittsteuerungen im unteren Drehzahlbereich ein Energieaufwand von etwa 35 - 40 % von dem des Volllastbetriebes erforderlich. Ähnliches gilt für Frequenzumformer. Bei diesen wird der Wirkungsgrad zumeist mit 98% angegeben, doch gilt dieses nur bei Volllast. Im unteren Drehzahlbereich, in diesem laufen die Rückkühler von Kühlhäusern und viele gesteuerte Pumpenantriebe, ist der Wirkungsgrad noch erheblich niedriger, als bei der Phasenanschnittsteuerung.

Aus der EP 0 865 147 B1 ist ein von einem Drehstrommotor angetriebener Ventilator bekannt, dessen Wicklungen jeweils bifilar mit hoch-isoliertem Draht gewickelt sind, wobei jeder Wicklungsstrang für die volle Spannung Phase gegen Phase des Drehstromnetzes ausgelegt ist. Mittels einer besonderen Schalteinrichtung können die Wicklungsstränge jedes Pols wahlweise parallel oder in Serie geschaltet werden, die Pole können außerdem wahlweise im Dreieck oder im Stern miteinander verbunden werden, oder es können jeweils drei Wicklungsstränge im Dreieck geschaltet werden und an die Verbindungspunkte sind dann die verbleibenden Wicklungsstränge angeschaltet und mit dem Netz verbunden. Auf diese Weise ist es möglich, fünf verschiedene Drehzahlen zu erzeugen, wobei in allen Schaltungszuständen der Motor mit einer sinusförmigen Spannung versorgt ist. Der Schlupf bei den niedrigen Drehzahlen ist zwar beachtlich, doch ist dieses für den Motor unschädlich, weil im niedrigen Drehzahlbereich der Ventilator dem Motor nur ein niedriges Drehmoment abverlangt. Nachteilig ist, dass ist diese Lösung schon bei der Konzeption der Anlage zu berücksichtigen und ohne vollständigen Austausch des Motors nicht nachrüstbar ist.

Aus DE 201 04 721 U1 ist ein Stromversorgungsgerät für einen Drehstrom-Asynchronmotor eines Antriebs mit quadratischer Drehmomentkurve bekannt, der einen Drehstrom-Trenntransformator verwendet, dessen Primärwicklungen jeweils aus einer Grundwicklung für den Volllastbetrieb und einer Zusatzwicklung bestehen, die etwa 25 % der Windungszahl der Grundwicklung hat. Die Grundwicklung ist so dimensioniert, dass sie zwischen die Phasen des Drehstromnetzes geschaltet, also mit einer Spannung von 400 V betrieben werden kann. Die Zusatzwicklung, die nochmals etwa 25 % der Windungszahl der Grundwicklung hinzufügt, würde also bei Reihenschaltung mit der Grundwicklung einen Betrieb mit 500 V zulassen. Übertragen auf den Betrieb mit 400 V ergibt sich also bei Einschaltung der Zusatzwicklung in Reihe zu der Grundwicklung eine Vergrößerung des Windungsverhältnisses zwischen Primär- und Sekundärseite des Transformators und eine entsprechende Herabsetzung der Sekundärspannung um 20%. Entsprechendes gilt für die Sekundärseite bei unterschiedlicher Ausnutzung der vorhandenen Teilwicklungen. Vorteilhaft ist, dass in allen Betriebszuständen den Motorwicklungen sinusförmige Spannungen zugeführt werden, nachteilig ist der hohe Aufwand wegen eines Trenntransformators, der für eine relativ hohe Last ausgelegt sein muss.

Der Erfindung liegt die Aufgabe zugrunde, ein Stromversorgungsgerät für einen Drehstrom-Asynchronmotor eines Antriebs mit quadratischer Drehmomentkurve, beispielsweise für den Antrieb eines Ventilators oder einer Pumpe, anzugeben, mit dem der Motor mit unterschiedlichen Drehzahlen betrieben werden kann, wobei bei allen Drehzahlen dem Motor eine sinusförmige Spannung zugeführt ist und der Aufwand an Bauelementen vergleichsweise gering ist und die Verluste weiter verkleinert sind.

Diese Aufgabe wird durch die im Anspruch 1 angegebenen Merkmale gelöst. Vorteilhafte Ausgestaltungen der Erfindung sind Gegenstand der Unteransprüche.

Die Erfindung verwendet einen Drehstrom-Spartransformator, dessen Wicklungen jeweils aus einer Grundwicklung für den Volllastbetrieb und einer Zusatzwicklung bestehen, die auf einen gemeinsamen Kern gewickelt sind. Die Grundwicklung ist so dimensioniert, dass sie mit einer Spannung von 3 x 400 V in Sternschaltung (Spartransformator) betrieben werden kann. Die der Grundwicklung wahlweise vorschaltbare Zusatzwicklung hat vorzugsweise eine solche Windungszahl, dass bei Vorschaltung der Zusatzwicklung vor die Grundwicklung, d.h. in Serie zur Grundwicklung, die Spannung an der Grundwicklung mit dem Faktor 1/√3 (= 1/1,73) abfällt. Es ergibt sich dadurch also derselbe Effekt, als würde man bei einem Drehstrom-Trenntransformator die Primärseite von Dreieckschaltung auf Sternschaltung umschalten. Mit der Erfindung wird dieser Effekt jedoch mit ersichtlich verringertem Aufwand erreicht.

Hat die Grundwicklung eine Anzapfung, die, bezogen auf die Netzspannung von 400 V, ohne vorgeschaltete Zusatzwicklung bei 182 V liegt, so fällt die Spannung an der Anzapfung bei Vorschaltung der Zusatzwicklung auf 105 V ab. Damit wird derselbe Erfolg erzielt, der sich ergibt, wenn man einen Drehstrom-Trenntransformator auf seiner Primärseite von Dreieckschaltung in Sternschaltung umschaltet, hier wieder aber mit sehr viel geringerem Aufwand.

Die Erfindung hat den besonderen Vorteil, dass sie bei vorhandenen Anlagen leicht nachgerüstet werden kann. Das erfindungsgemäße Stromversorgungsgerät braucht einfach zwischen das Drehstromnetz und den vorhandenen Drehstrommotor eingefügt zu werden, beispielsweise auch durch Austausch eines andersartigen Geräts ungünstiger Betriebseigenschaften.

Die Grundwicklungen können vorteilhaft zusätzlich je wenigstens eine Anzapfung aufweisen, an der eine weiter herabgesetzte Spannung abgegriffen werden kann. Diese Anzapfung liegt vorzugsweise bei etwa 45% der Windungszahl der Grundwicklung.

Die Erfindung ermöglicht mit Hilfe einer relativ einfachen Schalteranordnung mit sieben Schaltschützen oder äquivalenten Schalteinrichtungen, fünf verschiedene Drehzahlen am Asynchronmotor zu erzeugen, die in geeigneter Weise abgestuft sein können.

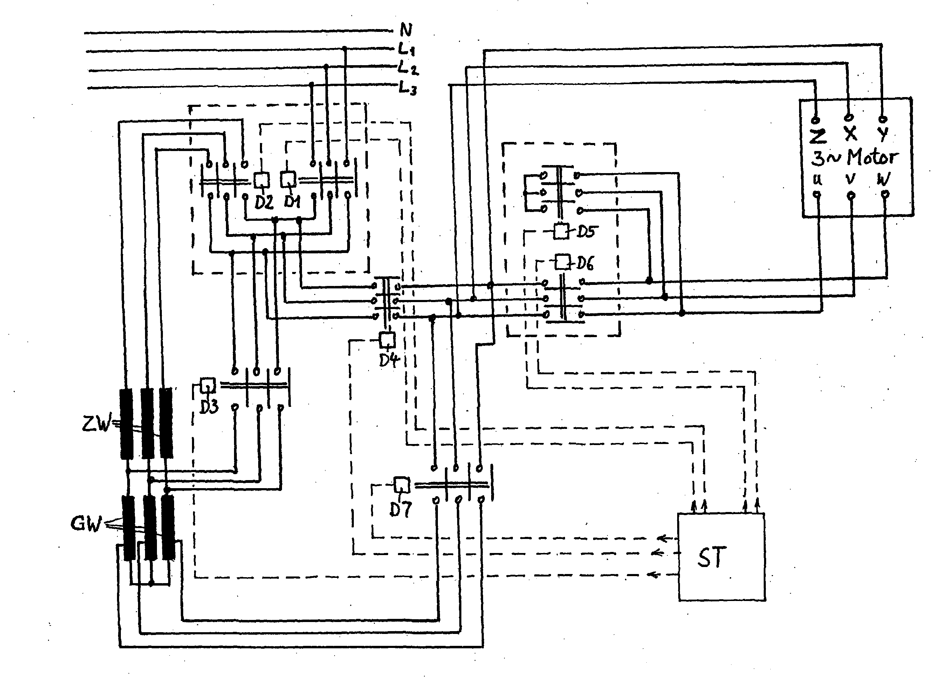

Die Erfindung wird nachfolgend unter Bezugnahme auf die Zeichnung näher erläutert.

Die Zeichnung zeigt eine Ausführungsform eines erfindungsgemäßen Stromversorgungsgeräts mit einem Drehstrom-Spartransformator mit Zusatzwicklungen und Anzapfungen in Kombination mit sieben Schaltschützen, das fünf unterschiedliche Drehzahlen erreichen lässt.

Das dargestellte Beispiel eines erfindungsgemäßen Stromversorgungsgeräts für einen Drehstrom-Asynchronmotor enthält einen Drehstrom-Spartransformator mit drei Grundwicklungen GW und drei Zusatzwicklungen ZW, wobei jeder Grundwicklung GW eine Zusatzwicklung ZW in Reihe geschaltet ist. Der Kern des Drehstrom-Spartransformators ist in der Zeichnung nicht dargestellt. Die Grundwicklungen GW sind in Stern geschaltet.

Weiterhin gehören zu dem Stromversorgungsgerät insgesamt sieben Schaltschütze D1 bis D7, die über Verbindungsleitungen mit dem Stromnetz, mit dem Drehstrom-Spartransformator, dem Drehstrom-Asynchronmotor und untereinander verbunden sind.

Der Schütz D1 ist eingangsseitig mit den drei Phasenleitungen L₁, L₂ und L₃ des Drehstromnetzes verbunden. Ausgangsseitig ist der Schütz D1 mit der Eingangsseite eines zweiten Schützes D2 verbunden, dessen Ausgänge mit den freien Enden der Zusatzwicklungen ZW verbunden sind. Die einen Anschlüsse eines dritten Schützes D3 sind mit den Verbindungspunkten der Grundwicklungen GW und der zugehörigen Zusatzwicklungen ZW verbunden. Die anderen Anschlüsse des Schützes D3 sind mit den Leitungen verbunden, die die Ausgangsseite des Schützes D1 mit der Eingangsseite des Schützes D2 verbinden.

An die letztgenannten Verbindungsleitungen ist ferner die Eingangsseite eines vierten Schützes D4 angeschlossen. Dessen Ausgangsseite ist mit den Anschlüssen Z, X und Y des Drehstrom-Asynchronmotors verbunden. Außerdem ist die Ausgangsseite des vierten Schützes D4 mit der Eingangsseite eines sechsten Schützes D6 verbunden, dessen Ausgangsseite mit den Anschlüssen u, v und w des Drehstrom-Asynchronmotors verbunden ist. Die letztgenannten Anschlüsse u, v und w sind über einen fünften Schütz D5 mit einer Kurzschlussbrücke verbindbar, um den Drehstrom-Asynchronmotor wahlweise in Sternschaltung bringen zu können. Die Ausgangsseite des vierten Schützes D4 ist ferner über einen siebenten Schütz D7 mit Anzapfanschlüssen an den Grundwicklungen GW des Drehstrom-Spartransformators verbunden.

Die Erregerwicklungen der Schütze D1 bis D7, die in der Zeichnung durch Kästchen symbolisiert sind, an denen die Bezugszeichen angebracht sind, sind mit einem gemeinsamen Steuergerät ST verbunden, von dem aus das Ein- und Ausschalten der Schütze entsprechend der gewünschten Drehzahl des Drehstrom-Asynchronmotors gesteuert wird.

Nachfolgend wird ein Schaltschema für die Schütze D1 bis D7 an einem Beispiel angegeben, bei dem ein Drehstrom-Asynchronmotor für den Antrieb eines Ventilators verwendet wird, dessen Nenndrehzahl bei Volllast 890 n/min beträgt und der eine Aufnahmeleistung bei Volllast von 2,2 kW hat.

| Stufe | n/min % | P(1) Watt | D1 | D2 | D3 | D4 | D5 | D6 | D7 | U(st) V |
|---|---|---|---|---|---|---|---|---|---|---|
| 1 | 100 | 2045 | + | -- | -- | + | -- | + | -- | 400 |
| 2 | 75 | 1280 | + | -- | -- | + | + | -- | -- | 230 |
| 3 | 63 | 1043 | + | -- | + | -- | -- | + | + | 182 |
| 4 | 37 | 434 | + | + | -- | -- | -- | + | + | 105 |
| 5 | 21 | 169 | + | + | -- | -- | + | -- | + | 61 |

Darin bedeuten n/min die relative Drehzahl, P(1) ist die Leistung, U(st) ist die Strangspannung in Volt am Drehstrom-Asynchronmotor und "+" bedeutet, dass der betreffende Schütz eingeschaltet ist und die Verbindung zwischen seinen betreffenden Anschlüssen herstellt, während "--" bedeutet, dass der Schütz ausgeschaltet ist.

Die verschiedenen Betriebszustände, die sich aus der vorgenannten Tabelle ergeben, lassen sich wie folgt beschreiben:
Stufe 1: Betrieb des Motors an 3 x 400 V in Dreieckschaltung direkt am Netz: Volle Drehzahl, keine Zusatzverluste, der Drehstrom-Spartransformator und die Zusatzwicklungen sind vom Netz abgeschaltet.
Stufe 2: Betrieb des Motors in Sternschaltung direkt am Netz: erste abgesenkte Drehzahl, keine Zusatzverluste, Strangspannung am Motor 230 Volt. Der Drehstrom-Spartransformator und die Zusatzwicklungen sind vom Netz abgeschaltet.
Stufe 3: Die Grundwicklungen GW des Drehstrom-Spartransformator sind mit dem Stromnetz verbunden, die Spannung für den Drehstrom-Asynchronmotor wird an den Anzapfungen der Grundwicklungen GW abgegriffen, der Drehstrom-Asynchronmotor ist in Dreieckschaltung betrieben. Die Zusatzwicklungen ZW sind unwirksam. Zweite abgesenkte Drehzahl. Die Strangspannung am Motor ist 182 V.
Stufe 4: Die Grundwicklungen GW des Drehstrom-Spartransformators sind über die mit ihnen in Reihe geschalteten Zusatzwicklungen ZW mit dem Stromnetz verbunden. Der Drehstrom-Asynchronmotor ist in Dreieckschaltung betrieben. Es ergibt sich die dritte abgesenkte Drehzahl, die Strangspannung am Motor ist 105 Volt.
Stufe 5: Die Stromzuführung am Drehstrom-Spartransformator wird gegenüber der vierten Stufe nicht geändert, jedoch wird der Drehstrom-Asynchronmotor in Sternschaltung betrieben. Es ergibt sich die vierte abgesenkte Drehzahl, die Strangspannung am Motor ist 61 Volt.

In den beiden erstgenannten Betriebszuständen oder Stufen ergeben sich keine Zusatzverluste, weil der Drehstrom-Spartransformator nicht wirksam ist. Im dritten Betriebszustand, der die zweite abgesenkte Drehzahl ergibt, betragen die Transformatorverluste ca. 1,35 %. Im vierten Betriebszustand, der die dritte abgesenkte Drehzahl ergibt, werden durch die Einbeziehung der Zusatzwicklungen ZW in den Stromkreis die Transformatorverluste entsprechend auf 58 % der vorgenannten Verluste, d.h. auf 0,62 % herabgesetzt. Im fünften Betriebszustand, in dem der Motor im Gegensatz zum vierten Betriebszustand in Sternschaltung betrieben ist und mit der niedrigsten Drehzahl läuft, sinken die Transformatorverluste auf etwa 0,48 %.

Da jedoch die Antriebe der Rückkühler in Kälteanlagen überwiegend im mittleren und unteren Drehzahlbereich arbeiten und die volle Leistung nur in extremen Situationen verlangt wird, liegt der energiesparende Effekt deutlich auf der Hand. Vergleichsmessungen von Phasenanschnittsteuerungen, Frequenzumformern und der erfindungsgemäßen Schaltung haben bei Kälteanlagen Einsparungen von 20 % bzw. über 40 % ergeben.

Bei allen Drehzahlen war das Ventilatorgeräusch mindestens um 3db(A) größer als das reine Motorgeräusch, d.h. das Motorgeräusch war nicht hörbar. Die Motorerwärmung ging mit fallender Drehzahl stark zurück, es traten also keine nennenswerten Verluste durch Erwärmung auf. Da die Stromversorgung des Motors mittels Sinusspannungen erfolgt, treten keine Rüttelkräfte auf. Das schont die Motorlager und alle anderen mechanischen Komponenten. Da keine Oberwellen erzeugt werden, treten auch keine Funkstörungen auf.

## Patentansprüche

1. Stromversorgungsgerät für einen Drehstrom-Asynchronmotor eines Antriebs mit quadratischer Drehmomentkurve, **dadurch gekennzeichnet, dass** sie enthält:
einen Drehstrom-Spartransformator mit drei für die volle Spannung Phase gegen Null ausgelegten Grundwicklungen (GW) und drei auf den selben Kern gewickelten Zusatzwicklungen (ZW) von denen je eine mit je einer der Grundwicklungen (GW) in Reihe geschaltet ist,
eine Schalteranordnung mit mehreren mehrpoligen Schaltern (D1 - D7), die Anschlüsse zur Verbindung mit dem Stromnetz (L₁, L₂, L₃), Anschlüsse zur Verbindung mit dem Drehstrom-Asynchronmotor und Anschlüsse und Verbindungsleitungen zum Verbinden
a) des Drehstrom-Asynchronmotors wahlweise direkt mit den Stromnetz (L₁, L₂, L₃) oder mit den Grundwicklungen (GW) des Drehstrom-Spartransformators, und
b) des Stromnetzes (L₁, L₂, L₃) wahlweise direkt mit den Grundwicklungen (GW) oder mit den freien Enden der Zusatzwicklungen (ZW), und
eine Steuereinrichtung (ST) zum selektiven Steuern der Schalter (D1 - D7) der Schalteranordnung.

2. Stromversorgungsgerät nach Anspruch 1 **dadurch gekennzeichnet dass** die Grundwicklungen (GW) des Drehstrom-Spartransformators jeweils wenigstens eine Anzapfung aufweisen und die Schalteranordnung einen Schalter (D3) und Verbindungsleitungen zum Verbinden der Motoranschlüsse wahlweise mit den Transformatoranzapfungen aufweist.

3. Stromversorgungsgerät nach Anspruch 1 oder 2 **dadurch gekennzeichnet, dass** die Schalteranordnung dazu eingerichtet ist, die Erregerwicklungen des Drehstrom-Asynchronmotors wahlweise in Dreieck- und in Sternschaltung zu verbinden.

4. Stromversorgungsgerät nach einem der Ansprüche 2 und 3 **dadurch gekennzeichnet, dass** die Anzapfung jeder Grundwicklung (GW) bei etwa 45 % der Windungszahl der betreffenden Wicklung liegt.

5. Stromversorgungsschaltung nach einem der vorhergehenden Ansprüche, **dadurch gekennzeichnet, dass** die Zusatzwicklungen (ZW) etwa 75% der Windungszahl der Grundwicklungen (GW) haben.
